# EUROPÄISCHE PATENTANMELDUNG

(11) **EP 1 175 017 A2**
(43) Veröffentlichungstag der Anmeldung: **23.01.2002**
(21) Anmeldenummer: 01117310.1
(22) Anmeldetag: 17.07.2001
(51) Int. Cl.: H04B 1/38, H04M 1/02

(54) **Mobile telekommunikationseinrichtung mit Armband**

(30) Priorität: 19.07.2000 DE 10035153
(71) Anmelder: SIEMENS AKTIENGESELLSCHAFT, 80333 München (DE)
(72) Erfinder: Andert, Markus, 80799 München (DE); Eckert, Rainer, 81677 München (DE); Fünfgelder, Helmut, 85386 Dietersheim (DE); Holz Auf der Heide, Bernd, 81549 München (DE); Mamier, Lothar, 81241 München (DE); Roski, Matthias, 82031 Grünwald (DE)

(57) **Zusammenfassung**

Mobile Telekommunikationseinrichtung (T1) mit Armband (1), an dem ein Elektronik-Gehäuse (2), welches im wesentlichen die elektronischen Komponenten (3) eines Mobilfunk-Endgerätes aufnimmt, eine Hörkapsel (7) und eine Sprechkapsel (8) verteilt angeordnet sind, wobei mindestens ein Akku (10; 10'; 10'') und/oder eine SIM-Karten-Lesehalterung (13) vom Elektronik-Gehäuse (2) getrennt am Armband verteilt angeordnet sind.

## Beschreibung

Die Erfindung betrifft eine mobile Telekommunikationseinrichtung.

Die Mobiltelefon-Hersteller sind ständig bemüht, immer kleinere und komfortablere Mobilfunk-Endgeräte auf den Markt zu bringen, die den wachsenden Ansprüchen der Verbraucher nach Flexibilität und Bequemlichkeit entsprechen.

In den letzten Jahren sind Entwicklungen der sogenannten "Handy-Uhr" bekannt geworden, bei denen mobile Endgeräte im Armbanduhr-Format entwickelt wurden.

Aus der US 4,847,818 ist ein Mobilfunk-Endgerät bekannt, bei welchem der Transceiver in einem Uhrengehäuse angeordnet ist, welches weiterhin ein digitales Display und eine Eingabe-Tastatur aufweist. An dem Uhrengehäuse ist ein Armband befestigt, an dessen einem Ende ein Mikrofon, das über Leitungen mit dem Transceiver verbunden ist, und an dessen anderem Ende ein Miniaturlautsprecher angeordnet ist. Nachteilig bei dieser sogenannten "Handy-Uhr" ist, daß sie beim Gebrauch vom Handgelenk abgenommen und die Schließe mit dem dort angeordneten Miniaturlautsprecher zum Ohr hin gehalten werden muß, was umständlich und unkomfortabel ist.

Ein weiteres Mobilfunk-Endgerät, das aus der US 5,008,864 bekannt ist, weist ein Gehäuse auf, das integral mit dem Armband zum Befestigen des Endgerätes ausgeführt ist. Das Gehäuse ist um einen Gelenkpunkt aufklappbar und nimmt die elektronischen Komponenten sowie einen Akku auf. Ein Miniaturlautsprecher ist in dem Gehäuse angeordnet. Von Nachteil bei diesem bekannten Mobilfunk-Endgerät ist, daß das Armband ebenfalls vom Handgelenk abgenommen werden muß, um ein Gespräch führen zu können. Um das ständige Öffnen und Schließen des Armbandes beim Telefonieren zu verhindern, wird bei einer weiteren Ausführungsform dieses bekannten Mobilfunk-Endgerätes ein separates Lautsprecherteil vorgesehen, welches aber nicht am Armband oder dem Gehäuse angeordnet werden kann. Das bringt den Nachteil mit sich, daß der Benutzer das separate Lautsprecherteil ständig bei sich führen muß, was die Gefahr des Verlierens oder Vergessens mit sich bringt.

Aus der DE 198 03 602 C1 ist ein Mobiltelefon bekannt, das lösbar an einem Grundsockel angebracht ist, an dem das Armband befestigt ist. Zum Telefonieren wird das Mobilfunktelefon vom Grundsockel gelöst und wie ein gewöhnliches Mobilfunktelefon benutzt, ohne daß das Armband vom Arm abgenommen wird. Hierbei ist es von Nachteil, daß das gesamte voluminöse Mobilfunktelefon an den Unterarm geschnallt wird, was nicht komfortabel ist und auch keine überzeugende ästhetische Wirkung hat.

In dieser Hinsicht ist auch die in der US 5,381,387 beschriebene Anordnung, die eine erleichterte Benutzung des an einem Armband getragenen Mobiltelefons ermöglichen soll, noch unbefriedigend. Hier ist die Sprechkapsel in einem vom eigentlichen Telefongehäuse getrennten Gehäuse untergebracht und an einem federelastischen Fortsatz des Armbandes fixiert, der über einen Drehpunkt mit dem eigentlichen Armband verbunden ist. Zum Telefonieren wird die Sprechkapsel von der Gehäuseseite gelöst und um den Drehpunkt so gedreht, daß sie in die Handinnenfläche zu liegen kommt. Hierdurch wird eine gewissermaßen in der Hand liegende Hör-/Sprech-Garnitur gebildet, und das Mobiltelefon kann benutzt werden, ohne es vom Arm abzunehmen.

Es ist Aufgabe der vorliegenden Erfindung, eine am Arm tragbare mobile Telekommunikationseinrichtung zu schaffen, die ein bequemes Telefonieren ermöglicht und ein unauffälliges und ästhetisches Erscheinungsbild hat.

Diese Aufgabe wird durch eine mobile Telekommunikationseinrichtung mit den Merkmalen des Patentanspruchs 1 gelöst.

Die Erfindung schließt den wesentlichen Gedanken ein, eine am Arm tragbare mobile Telekommunikationseinrichtung zu schaffen, deren wesentliche Bauteile, wie Akku(s), Antenne(n), Sprechkapsel und Hörkapsel, SIM-Kartenhalter usw., weitgehend als einzelne Module auf einem Armband verteilt angebracht sind, wobei die Verbindung zwischen den Modulen durch im Armband integrierte Leitungen gewährleistet wird. Als Leitung kann insbesondere ein Flachbandkabel oder eine flexible Leiterbahnfolie verwendet werden. Das Armband selbst besteht bevorzugt aus einem elektrischen Isolator.

Speziell die auf einem Armband verteilte, von der Endgerät-Elektronik getrennte oder jedenfalls gegenüber einem die Endgerät-Elektronik aufnehmenden Gehäuse gelenkig verschwenkbare Anordnung eines oder mehrerer Akkus bzw. einer SIM-Karten-Lesehalterung ermöglicht eine insgesamt relativ flache und mechanisch flexible Ausführung des gesamten Gerätes. Auch beim heutigen Stand der Mobiltelefonentwicklung einerseits und der Batterieentwicklung andererseits benötigen die zum Betrieb eines Mobilfunk-Endgerätes erforderlichen Akkus bekanntlich noch erheblichen Platz, und ihre Eingliederung in das die Elektronik aufnehmende Gehäuse macht dieses relativ voluminös.

Durch diese Verteilung der einzelnen Bauteile der mobilen Telekommunikationseinrichtung auf die ganze Länge des Armbandes wirkt die Einrichtung unauffällig, kann durch die kleinen Abmessungen bequem am Unterarm getragen werden und entspricht den ständig wachsenden ästhetischen Ansprüchen der Benutzer von Mobilfunk-Endgeräten.

Die Telekommunikationseinrichtung hat vorzugsweise einen sogenannten Endgerät-Kern, der in Form eines Gehäuses ausgebildet ist, in dessen Innerem sich die Hauptplatine mit den wesentlichen elektronischen Baugruppen eines Mobiltelefons befindet. Das Gehäuse ist mit seiner flachen unteren Oberfläche fest auf dem Armband angebracht, und auf seiner oberen Oberfläche sind eine Antenne und ein Display angeordnet. Auf einer Seitenfläche des Gehäuses sind bevorzugt zwei Funktionstasten angeordnet. Durch die Funktionstasten können alle Funktionen menügesteuert ausgeführt werden. Die Verwendung von nur zwei Tasten, die seitlich angeordnet sind, macht die Einrichtung unauffällig und ästhetisch, ohne daß der Eindruck vermittelt wird, daß der Benutzer ein hochkomplexes technisches Gerät auf dem Unterarm trägt.

Bevorzugt sind die Hörkapsel und die Sprechkapsel auf einer Halterung am Ende des Armbandes angeordnet, so daß sich beim Umlegen des Armbandes um das Handgelenk die Sprech- und die Hörkapsel auf der Innenseite des Handgelenkes befinden, wobei der Endgerät-Kern, auf dessen Oberseite die Antenne angeordnet ist, sich auf der Außenseite des Handgelenkes befindet. Die Hörkapsel ist vorzugsweise leicht aus der Halterung ausziehbar und zum Ohr zu führen, was ein bequemes und unauffälliges Telefonieren gewährleistet.

Bei einer weiteren bevorzugten Ausführungsform sind die Hörkapsel und die Sprechkapsel an einem Ende des Armbandes derart angeordnet, daß sie durch eine Spange miteinander verbunden sind, sich beim Aufsetzen des Armbandes auf der Innenseite des Armgelenkes befinden und zusammen ausziehbar sind. Die Hör- und die Sprechkapsel sind über eine entsprechende Verkabelung mit der Telekommunikationseinrichtung am Armband verbunden. Somit wird ein bequemes Telefonieren durch Einstecken der Hörkapsel in das Ohr erzielt, wobei die Hörkapsel und die mit ihr verbundene Sprechkapsel nicht mit der Hand gehalten werden müssen und die das Endgerät tragende Hand weit weg vom Mund des Sprechers liegen kann. Die Spange ist so kurz, daß sie bei Nichtbenutzung parallel auf dem Armband fixiert werden kann, so daß die Trageeigenschaften der Telekommunikationseinrichtung nicht beeinträchtigt werden.

Diese Ausführungsform bringt den Vorteil mit sich, daß der Benutzer ungehindert telefonieren kann, während er andere Tätigkeiten ausübt, wie beispielsweise Auto- oder Radfahren.

Bei einer hierzu alternativen (oder ggf. auch mit der vorgenannten Ausführung kombinierbaren) Ausführungsform der Erfindung ist vorgesehen, daß eine Headsetbuchse auf dem Armband angeordnet ist, die zum Einstecken einer Mikrofon-Kopfhörer-Einheit (Headset) dient, was ein einfaches und bequemes Telefonieren gewährleistet. Diese Ausführung ist besonders vorteilhaft für bestimmte professionelle Anwendungen, gegebenenfalls aber auch für den Haushalt- bzw. Kraftfahrzeugbereich.

Vorzugsweise kann in dem vorgeschlagenen Endgerät ein GPS-Empfänger vorgesehen sein, so daß beispielsweise in Notsituationen die genaue Position des Benutzers festgestellt werden kann.

In Verbindung mit einem Blutdruck- und/oder Pulsmesser, der als Einzelmodul auf dem Armband angeordnet ist, kann die Telekommunikationseinrichtung von Sportlern, wie z. B. Radfahrern oder Skatern, benutzt werden, die nicht nur laufend ihr physische Verfassung überwachen, sondern auch ihre Position mit Hilfe des integrierten GPS-Empfängers ermitteln möchten. Die Einrichtung kann aber auch von Personen mit gesundheitlichen Problemen benutzt werden, wobei der integrierte GPS-Empfänger über ein Notrufsystem Hilfe in Gefahrensituationen herbeirufen kann. Somit kann die Telekommunikationseinrichtung auch lebensrettende Funktionen erfüllen.

Durch das Anbringen einer IrDa-Schnittstelle oder einer Blue-tooth-Sende- und -Empfangseinheit als separates Modul auf dem Armband kann die Telekommunikationseinrichtung mit externen Einheiten, wie z. B. PCs, Laptops usw. kommunizieren.

Vorzugsweise können auch zusätzlich ein FM/AM-Empfänger und/ oder auch ein MP3-Player als Module auf dem Armband angebracht sein, womit eine weitgehend universelle Kommunikations- und Informationseinrichtung geschaffen werden kann, die höchsten Ansprüchen der Benutzer entspricht. Durch die verteilte Anordnung wird ein hoher Tragekomfort erreicht.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1, 1A eine schematische Darstellung zur Erläuterung des Aufbaus einer Telekommunikationseinrichtung gemäß einer ersten Ausführungsform der Erfindung in Drauf- und Seitenansicht, ,
Fig. 2, 2A eine schematische Darstellung zur Erläuterung des Aufbaus einer Telekommunikationseinrichtung gemäß einer zweiten Ausführungsform der Erfindung in Drauf- und Seitenansicht,
Fig. 3, 3A eine schematische Darstellung zur Erläuterung des Aufbaus einer Telekommunikationseinrichtung gemäß einer weiteren Ausführungsform der Erfindung in Drauf- und Seitenansicht,
Fig. 4 eine schematische Perspektivdarstellung einer Telekommunikationseinrichtung ähnlich Fig. 1 in Benutzung, und
Fig. 5 eine schematische Perspektivdarstellung einer weiteren Telekommunikationseinrichtung in Benutzung.

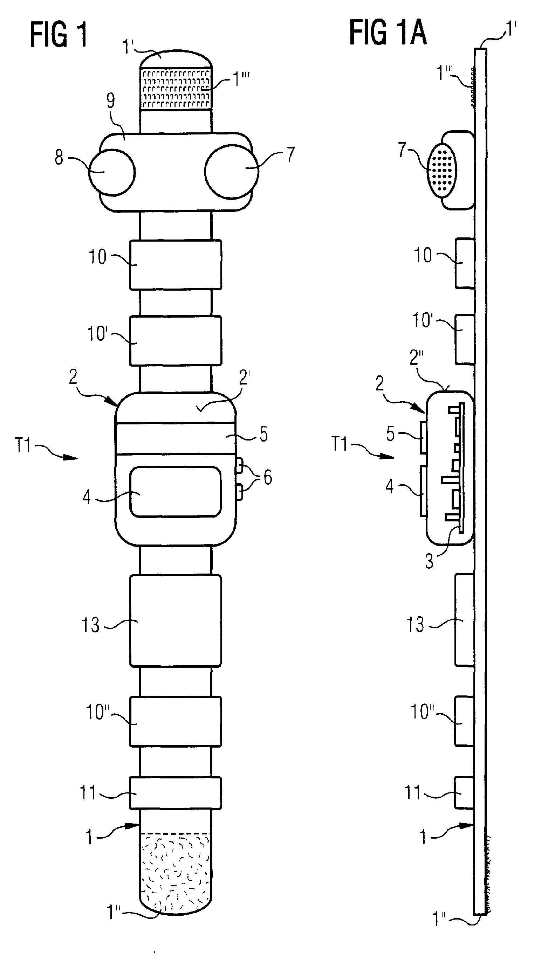

Die Figuren 1 und 1A zeigen schematisch als Prinzipskizze den Aufbau einer Telekommunikationseinrichtung (eines Mobiltelefons) T1, die am Arm tragbar ist, in einer Draufsicht und einer Seitenansicht. Auf einem Armband 1 sind einzelne Module der Einrichtung verteilt auf dessen ganze Länge und auf seiner oberen Oberfläche angeordnet. Sie können aber mindestens partiell auch in das Armband 1 integriert sein.

Das Armband 1 ist an den Enden 1' und 1'' zur leichten Anpassung an die Stärke des Handgelenkes des jeweiligen Benutzers mit einem Klettverschluß 1''' versehen. Die Module sind durch ein im Armband 1 integriertes (nicht dargestelltes) Flachbandkabel oder eine flexible Leiterbahnfolie miteinander verbunden. Das Armband 1 selbst besteht aus einem Kunststoff-Folien- oder -Gewebeband.

Auf dem Armband 1 ist annähernd in der Mitte zwischen den Enden 1' und 1'' ein Endgerät-Kern 2 angeordnet. Der Endgerät-Kern 2 hat ein Gehäuse, das im wesentlichen die Form eines flachen Quaders mit einer Oberfläche 2' und Seitenflächen 2" aufweist. Durch die mittige Anordnung des Endgerät-Kernes 2 auf dem Armband 1 und durch die relativ geringen Abmessungen hat das Gehäuse das Erscheinungsbild eines Armbanduhrengehäuses.

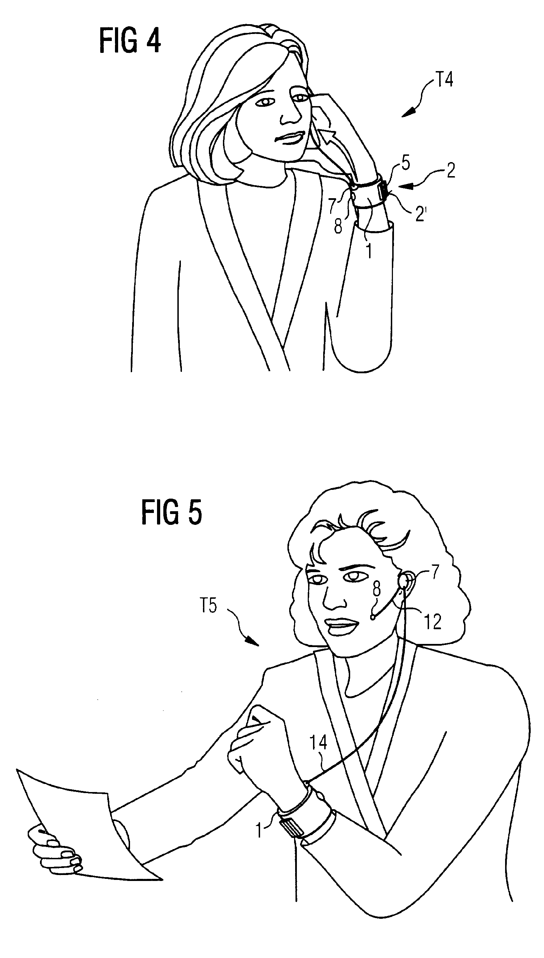

Im Inneren des Endgerät-Kernes 2 ist eine Leiterplatte 3 mit den wesentlichen elektronischen Baugruppen eines Mobiltelefons angeordnet, wie in Fig. 1A schematisch dargestellt. Auf der Oberfläche 2' des Endgerät-Kernes 2 sind ein Display 4 und eine Mobilfunkantenne 5 angeordnet. Die Antenne 5 ist als stabförmiger Strahler ausgebildet. Durch die Anbringung der Antenne 5 auf dem mittig angeordneten und daher in Gebrauchslage auf der Außenseite des Handgelenkes eines Benutzers liegenden Endgerät-Kern 2 wird erreicht, daß beim Telefonieren (vgl. Fig. 4) die Antenne 5 sich einerseits nicht im Funkschatten des Handgelenkes befindet und andererseits der Kopf des Benutzers beim Telefonieren vor möglichen gesundheitsschädlichen Auswirkungen des elektromagnetischen Feldes geschützt wird.

Auf der Seitenfläche 2'' des Endgerät-Kernes 2 sind zwei Funktionstasten 6 angeordnet. Durch die Betätigung der Funktionstasten 6 werden menügesteuert die gewünschten Funktionen ausgeführt. (Es ist aber auch möglich, durch eine im Endgerät-Kern integrierte Spracherkennungsvorrichtung die Mobiltelefonfunktionen über eine Spracheingabe zu steuern, ohne eine Betätigung von Funktionstasten.)

Nahe dem ersten (in der Figur oberen) Ende 1' des Armbandes 1 sind eine Hörkapsel 7 und eine Sprechkapsel 8 auf einer Halterung 9 angebracht, wobei die Hörkapsel 7 mittels eines nicht dargestellten aufrollbaren Kabels herausziehbar in der Halterung 9 angeordnet ist und beim Telefonieren herausgezogen und mit der Hand an das Ohr gehalten werden kann.

Zwischen der Halterung 9 und dem Endgerät-Kern 2 sind zwei Akkus 10 und 10' auf dem Armband 1 angeordnet. Zwischen dem unteren Ende 1" des Armbandes 1 und dem Endgerät-Kern 2 ist ein weiterer Akku 10'' vorgesehen. Somit besteht die Stromversorgung aus drei kleinen Akkus, weil ein einzelner Akku mit der notwendigen Kapazität ziemlich groß ist und sich an das Handgelenk schlecht anschmiegen könnte.

Zwischen dem Akku 10'' und dem Endgerät-Kern 2 ist eine SIM-Karten-Lesehalterung 13 auf dem Armband 1 angeordnet. An dem zweiten (in der Figur unteren) Ende 1'' des Armbandes 1 befindet sich eine Headsetbuchse 11, die zum Anschluß eines Headset auf dem Armband 1 dient und auf Wunsch zum noch bequemeren Telefonieren benutzt werden kann.

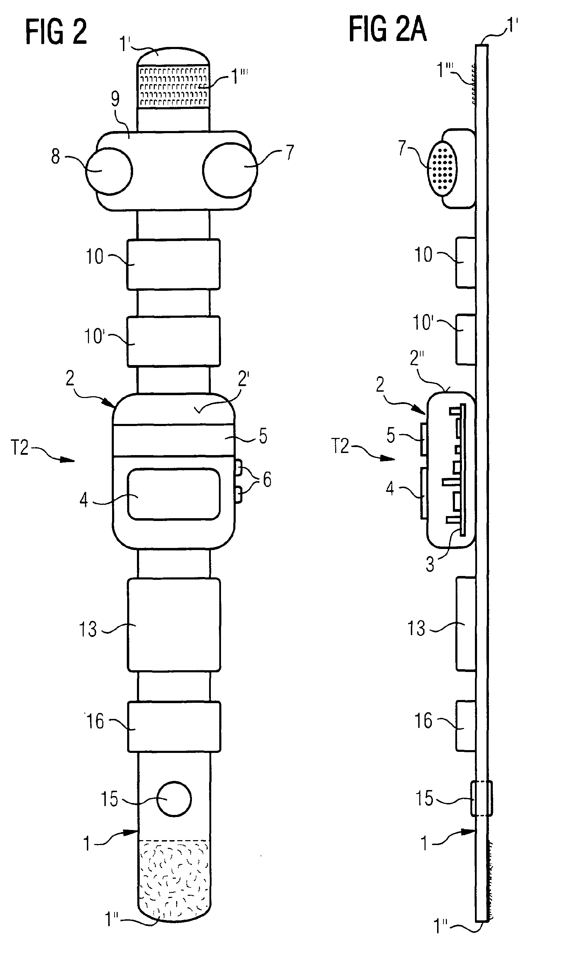

Die Fig. 2 und 2A zeigen schematisch vereinfacht den Aufbau einer Telekommunikationseinrichtung T2 gemäß einer zweiten Ausführungsform der Erfindung. Die Einrichtung enthält ebenso, wie die in Fig. 1 dargestellte Einrichtung, ein Armband 1, auf dem ein Endgerät-Kern 2 mit einer integrierten Leiterplatte 3 mittig angeordnet ist. Weiterhin enthält die Einrichtung zwei Akkus 10 und 10', eine Hörkapsel 7 und eine Sprechkapsel 8, die auf einer Halterung 9 angeordnet sind, sowie eine SIM-Karten-Lesehalterung 13.

Die Unterschiede zwischen den beiden Ausführungsformen liegen darin, daß bei der zweiten Ausführungsform nur zwei Akkus für die Stromversorgung vorgesehen sind, daß statt einer Headsetbuchse ein GPS-Empfänger 16 als separates Modul auf dem Armband 1 angeordnet ist und daß nahe dem unteren Ende 1'' ein Pulsmesser 15 ebenfalls als separates Modul vorgesehen ist. Der Pulsmesser 15 ist derart in das Armband 1 eingebettet, daß eine Sensorfläche auf der Innenseite des Armbandes angeordnet ist, so daß sie bei angelegtem Armband direkt auf der Innenfläche des Handgelenkes des Benutzers aufliegt. Die durch den GPS-Empfänger ermittelten Positionsdaten und die Puls-Meßwerte werden auf dem Display 4 des Endgerät-Kernes 2 angezeigt. Somit kann der Benutzer durch Betätigung einer der Funktionstasten 6 diese Daten abrufen.

In einer besonders sinnreichen und zweckmäßigen Variante der hier beschriebenen Telekommunikationseinrichtung T2, die beispielsweise für Menschen mit lebensbedrohlichen Herzerkrankungen geeignet ist, ist der Pulsmesser 15 über das (nicht dargestellte) Signalleitungssystem im Inneren des Armbandes 1 mit dem GPS-Empfänger 16 und dem Endgerät-Kern 2 mit den Mobiltelefonfunktionen derart verbunden, daß er Steuersignale an diese übermitteln kann. Auf diese Weise kann beispielsweise bei einem starken Anstieg der Pulsfrequenz, der auf eine akute Herzfunktionsstörung hindeutet, selbsttätig der GPS-Empfänger und das Mobiltelefon aktiviert und über das Mobiltelefon ein Notrufsignal an die Zentrale eines Patientenbetreuungssystems abgesetzt werden, der zugleich die Position des akut gefährdeten Benutzers der Telekommunikationseinrichtung meldet. (Für Patienten mit anderen Krankheitsbildern kann an die Stelle des Pulsmessers beispielsweise ein Miniatur-Blutdruckmeßgerät treten.) Mit diesem Gerät wird also ein in seinem Gebrauchswert weit über ein herkömmliches Mobiltelefon hinausgehendes Mehrfunktionsgerät geschaffen, das dank der verteilten Anordnung der wesentlichen Funktionskomponenten auf dem Armband dennoch in einer ästhetisch ansprechenden Gestaltung realisierbar, bequem zu tragen und leicht zu handhaben ist.

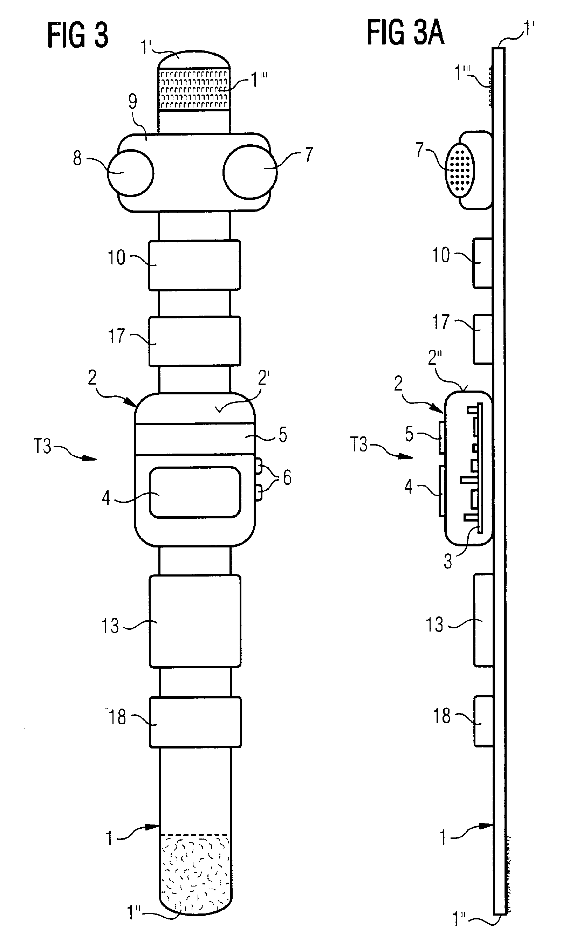

Die Fig. 3 und 3A zeigen schematisch den Aufbau einer Telekommunikationseinrichtung T3 gemäß einer weiteren Ausführungsform der Erfindung. Diese enthält ebenso wie die in Fig. 1 und 1A gezeigte Einrichtung ein Armband 1, auf dem die folgenden Aufbauteile als Module angebracht sind: ein Endgerät-Kern 2 mit einer Leiterplatte 3, eine Halterung 9, auf der eine Hörkapsel 7 und eine Sprechkapsel 8 angebracht sind, ein Akku 10 sowie eine SIM-Karten-Lesehalterung 13.

Im Unterschied zu der ersten Ausführungsform enthält die vorliegende Ausführungsform einen FM/AM-Empfänger 17, der zwischen dem Akku 10 und dem Endgerät-Kern 2 angeordnet ist, sowie eine IrDa-Schnittstelle 18, die als separates Modul zwischen der SIM-Karten-Lesehalterung 13 und dem unteren Ende 1'' des Armbandes angeordnet ist. Durch die IrDa-Schnittstelle 18 wird die drahtlose Kommunikation mit externen Geräten wie z. B. PCs, Laptops usw. gewährleistet. Hierüber kann die Telekommunikationseinrichtung zur Datenübertragung aus dem bzw. in den PC per Mobilfunk genutzt werden.

In einer modifizierten Ausführungsform kann anstelle des FM/AM-Empfängers ein miniaturisiertes Musikspeicher- und -Abspielgerät, insbesondere ein MP3-Player, vorgesehen sein. Bei dieser Modifikation ist die drahtlose Schnittstellenverbindung zu einem externen Computer - die übrigens in vorteilhafter Weise auch als Bluetooth-Funkverbindung ausgebildet sein kann- natürlich von besonderem Vorteil.

Fig. 4 zeigt in einer perspektivischen Darstellung ein weiteres Mobiltelefon T4 während der Benutzung. Das Armband 1 ist hier breiter als bei den obigen Ausführungen und weich gepolstert, und ein Teil der Funktionsmodule ist unsichtbar in die Polsterung eingebettet. Die Hörkapsel 7 und die Sprechkapsel 8 befinden sich auf der Innenseite des Handgelenkes des Benutzers, während die Antenne 5, die auf der oberen Oberfläche 2' des Endgerät-Kernes 2 angeordnet ist, auf der Außenseite des Handgelenkes liegt. Beim Telefonieren wird die Hörkapsel 7, die mit einem Kabel versehen ist, aus dem Armband 1 herausgezogen und mit der Hand an das Ohr gehalten.

Fig. 5 zeigt ein Mobiltelefon T5 gemäß einer weiteren modifizierten Ausführungsform während der Benutzung. Die Hörkapsel 7 und die Sprechkapsel 8 sind hier über eine Spange 12 miteinander verbunden und liegen am Armband 1 auf der Innenseite des Handgelenkes auf. Beim Telefonieren wird die Hörkapsel 7 und die mit ihr verbundene Sprechkapsel 8 aus dem Armband 1 herausgezogen, wobei die Hörkapsel 8 an das Ohr angesteckt werden kann, um ein bequemeres Telefonieren zu ermöglichen. Die Sprechkapsel-/Hörkapsel-Einheit 7, 8 ist mit einem langen Kabel 14 versehen, so daß es während der Benutzung nicht notwendig ist, die Hand in der Nähe vom Kopf zu halten. Dieses Ausführungsbeispiel ist besonders vorteilhaft für Sportler, aber auch für die Benutzung im privaten Bereich geeignet.

Die Ausführung der Erfindung ist nicht auf die oben beschriebenen Ausführungen beschränkt, sondern ebenso in einer Vielzahl von Abwandlungen möglich, die im Rahmen fachgemäßen Handelns liegen.

## Patentansprüche

1. Mobile Telekommunikationseinrichtung (T1 bis T5) mit Armband (1), an dem ein Elektronik-Gehäuse (2), welches im wesentlichen die elektronischen Komponenten (3) eines Mobilfunk-Endgerätes aufnimmt, eine Hörkapsel (7) und eine Sprechkapsel (8) verteilt angeordnet sind,
**dadurch gekennzeichnet, daß**
mindestens ein Akku (10; 10'; 10'') und/oder eine SIM-Karten-Lesehalterung (13) vom Elektronik-Gehäuse (2) getrennt am Armband verteilt angeordnet sind.

2. Mobile Telekommunikationseinrichtung nach Anspruch 1,
**dadurch gekennzeichnet, daß**
mehrere Akkus (10; 10'; 10'') voneinander und von dem Elektronik-Gehäuse (2) getrennt auf dem Armband (1) angeordnet sind.

3. Mobile Telekommunikationseinrichtung nach Anspruch 1 oder 2,
**dadurch gekennzeichnet, daß**
die Hörkapsel (7) und die Sprechkapsel (8), insbesondere an einer gemeinsamen Halterung (9), nahe einem Verschlußelement (1''') des Armbandes (1) angeordnet sind derart, daß sie im Gebrauch auf der Innenseite des Handgelenkes des Benutzers liegen.

4. Mobile Telekommunikationseinrichtung nach einem der vorangehenden Ansprüche,
**dadurch gekennzeichnet, daß**
eine Mobilfunkantenne (5) in oder an dem Elektronik-Gehäuse (2) oder benachbart zu diesem auf dem Armband (1) angeordnet ist derart, daß sie im Gebrauch auf der Außenseite des Handgelenks des Benutzers liegt.

5. Mobile Telekommunikationseinrichtung nach Anspruch 3 oder 4,
**dadurch gekennzeichnet, daß**
die Hörkapsel (7) über eine ausziehbare Zuleitung (14) mit der Halterung (9) verbunden ist.

6. Mobile Telekommunikationseinrichtung nach Anspruch 3 oder 4,
**dadurch gekennzeichnet, daß**
die Hörkapsel (7) und die Sprechkapsel (8) über eine Spange (12) miteinander verbunden und über eine gemeinsame Zuleitung (14) ausziehbar mit dem Armband (1), insbesondere der Halterung (9), verbunden sind.

7. Mobile Telekommunikationseinrichtung nach einem der vorangehenden Ansprüche,
**dadurch gekennzeichnet, daß**
nahe einem Ende (1'; 1") des Armbandes (1) eine separate Anschlußbuchse (11) für einen Kopfhörer und/oder eine Sprechgarnitur angeordnet ist derart, daß diese im Gebrauch auf der Innenseite oder im frontalen Seitenbereich des Handgelenkes des Benutzers liegt.

8. Mobile Telekommunikationseinrichtung nach einem der vorangehenden Ansprüche,
**dadurch gekennzeichnet, daß**
auf dem Armband (1) getrennt vom Elektronik-Gehäuse (2) des Mobilfunk-Endgerätes ein Zusatzelektronik-Gehäuse (16; 17) angeordnet ist, welches im wesentlichen die elektronischen Komponenten eines Zusatzgerätes, insbesondere eines GPS-Empfangsteiles und/oder Rundfunkempfängers und/oder eines Musikabspielgerätes, aufnimmt.

9. Mobile Telekommunikationseinrichtung nach einem der vorangehenden Ansprüche,
**dadurch gekennzeichnet, daß**
an dem Armband (1) getrennt von dem Elektronik-Gehäuse (2) und insbesondere auch dem Zusatzelektronik-Gehäuse (16; 17) eine Schnittstelleneinrichtung, insbesondere eine IrDa-Schnittstelle (18) oder eine Bluetooth-Funksende-/Empfangseinheit, zur Verbindung mit mindestens einem externen Gerät angeordnet ist.

10. Mobile Telekommunikationseinrichtung nach einem der vorangehenden Ansprüche,
**dadurch gekennzeichnet, daß**
an dem Armband (1) ein separater Fühler (15) oder ein separates Gerät zur Erfassung einer Körperzustandsgröße des Benutzers, insbesondere ein Blutdruck- und/oder Pulsmesser, angeordnet ist.

11. Mobile Telekommunikationseinrichtung nach einem der Ansprüche 8 bis 10,
**dadurch gekennzeichnet, daß**
auf dem Elektronik-Gehäuse (2) eine Anzeigeeinheit (4) angeordnet ist, welche insbesondere auch zur Funktionsanzeige von in dem Zusatzelektronik-Gehäuse (16; 17) untergebrachten Komponenten und/oder eines durch den Fühler (15) bzw. das Gerät zur Erfassung einer Körperzustandsgröße ermittelten Meßwertes genutzt wird.

12. Mobile Telekommunikationseinrichtung nach Anspruch 10 oder 11,
**dadurch gekennzeichnet, daß**
der Fühler (15) zur Erfassung einer Körperzustandsgröße an dem Armband (1) benachbart zu einem von dessen Enden (1'; 1'') derart angeordnet ist, daß er eine auf der Innenseite des Armbandes liegende Sensorfläche aufweist und im Gebrauch auf der Innenseite des Handgelenkes des Benutzers aufliegt.
